# EUROPEAN PATENT APPLICATION

(11) **EP 3 484 165 A1**
(43) Date of publication of application: **15.05.2019**
(21) Application number: 17200980.5
(22) Date of filing: 10.11.2017
(51) Int. Cl.: H04N 21/431, H04N 21/81

(54) **DEVICE AND METHOD OF OPERATION FOR PROVIDING AN OUTPUT TO A DISPLAY SCREEN**

(71) Applicant: Vestel Elektronik Sanayi ve Ticaret A.S., 45030 Manisa (TR)
(72) Inventor: DÖMEKELI,, Erhan, 45030 Manisa (TR)
(74) Representative: Flint, Adam

(57) **Abstract**

A device (100) is arranged to provide an output to a display screen (102). The device (100) is configured to receive a file associated with a television channel logo (104). The device is also configured to store the file associated with the television channel logo (104) in a memory of the device (100). The device is configured to perform at least one of: (i) changing the position of the television channel logo (104) on the display screen (102), and (ii) preventing the television channel logo (104) from being displayed on the display screen (102).

## Description

### Technical Field

The present disclosure relates to a device configured to provide an output to a display screen, a method of operating the device and a computer program.

### Background

Digital Video Broadcasting (DVB), including terrestrial, cable and satellite, provides for transmission of service logo data such as a logo mark. The logo mark may be a watermark-like station logo that most television broadcasters overlay over a portion of the display area of their programmes to identify the channel or broadcaster. Typically, the logo mark is displayed in a corner (usually the top left or top right) of the display area.

### Summary

According to a first aspect disclosed herein, there is provided a method of operating a device configured to provide an output to a display screen, the method comprising: receiving a file associated with a television channel logo; storing the file in a memory of the device; and performing at least one of: (i) changing the position of the television channel logo on the display screen, and (ii) preventing the television channel logo from being displayed on the display screen.

As mentioned, in known arrangements, typically the logo or logo mark is displayed in a corner (usually the top left or top right) of the display area of a display screen. This can however cause annoyance for the user and affect their viewing experience. For example, the logo mark may overlay an area of visual importance on the display area. For example, when watching a sports programme, the logo mark often coincides and therefore obstructs the time, score and/or other information which are typically located in one or more corners of the display screen. Also, the presence of a static image on a display device may cause "burn-in" of the image. Examples of aspects described herein overcome these problems as a user can move or change the display of the logo or remove the display of the logo altogether.

In an example, a user of the device is provided with an option to perform at least one of: (i) changing the position of the television channel logo on the display screen, and (ii) preventing the television channel logo from being displayed on the display screen.

The user may be presented with a user interface, which may be displayed on the display screen, which provides the user with the option to change the position of the channel logo or to remove the channel logo.

In an example, at least one of: (i) changing the position of the television channel logo on the display screen, and (ii) preventing the television channel logo from being displayed on the display screen is automatically performed after the television channel logo has been displayed on the display screen for a predetermined time period.

In an example, the position of the television channel logo on the display screen is continually changed. That is, the television channel logo is repositioned once every predetermined time period.

In an example, a further file associated with an alternative version of the television channel logo is received; the further file associated with the alternative version of the television channel logo is stored; and the alternative version of the television channel logo is displayed.

In an example, at least one colour of the television channel logo displayed on the display screen is changed.

According to a second aspect disclosed herein, there is provided a device constructed and arranged to provide an output to a display screen, the device being configured to: receive a file associated with a television channel logo; store the file associated with the television channel logo in a memory of the device; and perform at least one of: (i) changing the position of the television channel logo on the display screen, and (ii) preventing the television channel logo from being displayed on the display screen.

In an example, the device is configured to provide a user interface to be displayed on the display screen to present a user of the device with an option to perform at least one of: (i) changing the position of the television channel logo on the display screen, and (ii) preventing the television channel logo from being displayed on the display screen.

In an example, the device is configured to automatically perform at least one of: (i) changing the position of the television channel logo on the display screen, and (ii) preventing the television channel logo from being displayed on the display screen, after the television channel logo has been displayed on the display screen for a predetermined time period.

In an example, the device being configured to: receive a further file associated with an alternative version of the television channel logo; store the further file associated with the alternative version of the television channel logo; and display the alternative version of the television channel logo.

In an example, the device is configured to change at least one colour of the television channel logo displayed on the display screen.

In an example, the device is at least one of: (i) a television set and (ii) a set-top box.

There may also be provided a computer program for carrying out a method as described above.

### Brief Description of the Drawings

To assist understanding of the present disclosure and to show how embodiments may be put into effect, reference is made by way of example to the accompanying drawings in which:
Figure 1 shows schematically an example device configured to change the position of a television channel logo on a display screen, and/or prevent the television channel logo from being displayed on the display screen;
Figure 2 shows schematically an example user interface of a device for controlling one or more aspects of a television channel logo; and
Figure 3 shows schematically an example control system for operating a device configured to change the position of a television channel logo on a display screen, and/or prevent the television channel logo from being displayed on the display screen.

### Detailed Description

Digital Video Broadcasting (DVB), including terrestrial, cable and satellite, provides for the transmission of service logo data such as a television (TV) channel logo. In current digital television broadcasting, for example as specified in various DVB standards, a table in a section format called a Common Data Table (CDT) is applied for transmission of the server logo data. A "Logo Transmission Descriptor", describing the character string for a simple logo or pointing to CDT-format logo data, is transmitted along with the CDT to a digital broadcast receiving device.

The TV channel logo is used by broadcasters to identify the broadcaster (e.g. BBC), a sub-channel (e.g. BBC HD) or to indicate that a programme is being broadcast live or is a previous recording. Whatever purpose the TV channel logo is intended to serve, the position of the logo on the display device, such as a television set or computer monitor or screen or the like, is typically determined by the broadcaster in known systems. Ordinarily the user of a device connected to a screen which is displaying the programme (and therefore the TV channel logo) has no control over the position or, more generally, the whole presentation or representation of the TV channel logo. This may result in the TV channel logo (partially or fully) obstructing a portion of the display area. The user's viewing experience is therefore negatively affected by the TV channel logo.

In examples described herein, a device provides an output to a display screen. For example, the device may be a television set or a set-top box or a computer connected to or having a display screen. The device is configured to receive a file associated with a TV channel logo. The TV channel logo may be received as, for example, a JPEG, JPG, PNG, BMP, bitmap, etc. file format. Amongst other possibilities, the file may be broadcast to the device (for example as a satellite or cable or terrestrial signal) or transmitted over a broadband connection. The device is configured to store the file associated with the TV channel logo in a memory of the device. The device is configured to perform at least one of (i) changing the position of the TV channel logo on the display screen, and (ii) preventing the TV channel logo from being displayed on the display screen.

That is, in examples described herein the TV channel logo can be repositioned on the screen or removed from the screen entirely. Advantageously, the repositioning or the removal of the TV channel logo can result in enhanced viewing of the corresponding underlying TV programme. For example, the TV channel logo can be repositioned or removed altogether if it is covering or obscuring an important section of the display area.

Furthermore, the repositioning or the removal of the TV channel logo can also help to prevent pixel burn-in. Pixel burn-in is a phenomenon which occurs when a static image is displayed on a display screen continually for a relatively long period of time (which may only be a few minutes in practice, depending on the display technology). Display screens that generate the pixels directly, including for example display screens that use OLEDs (organic light emitting diodes) or plasma technology, are particularly susceptible to pixel burn-in.

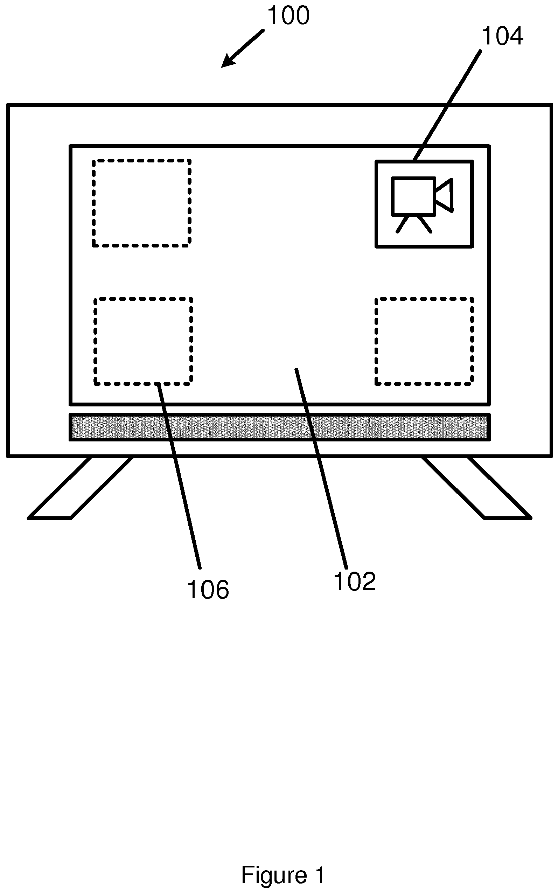

Figure 1 shows schematically an example device 100. The device 100 may be for example a media device such as a television set, a set top box, a DVD player, a personal computing device such as a laptop or desktop or tablet computer, a video game console, a cellular phone (including a so-called "smart phone"), etc.

The device 100 is constructed and arranged to provide an output to a display screen 102. Display screens 102 are used in many different types of consumer apparatus including for example as television screens or monitors, computer displays or monitors, and displays for other computing devices, including smartphones, tablet computers, laptop computers, etc. Display screens 102 are also used in many public environments in so-called "signage", for example, for displaying adverts or for information or entertainment that is of interest to a larger audience.

Figure 1 shows a TV channel logo 104 displayed in the top right corner of the display screen 102. The TV channel logo 104 is ordinarily displayed in a position defined by the broadcaster responsible for transmitting and/or creating the programme. Also shown in Figure 1 are additional portions 106 of the display screen 102 in which the TV channel logo 104 can be repositioned according to the examples described herein. For example, the additional portions 106 may correspond to the other corners of the display screen 102. Whilst only three additional portions 106 are shown in Figure 1, in some examples the TV channel logo 104 may be repositioned freely to any portion of the display screen 102.

In an example, the device 100 provides a user interface to be displayed on the display screen 102 to present a user of the device 100 with an option to perform at least one of: (i) changing the position of the TV channel logo 104 on the display screen 102, and (ii) preventing the TV channel logo 104 from being displayed on the display screen 102.

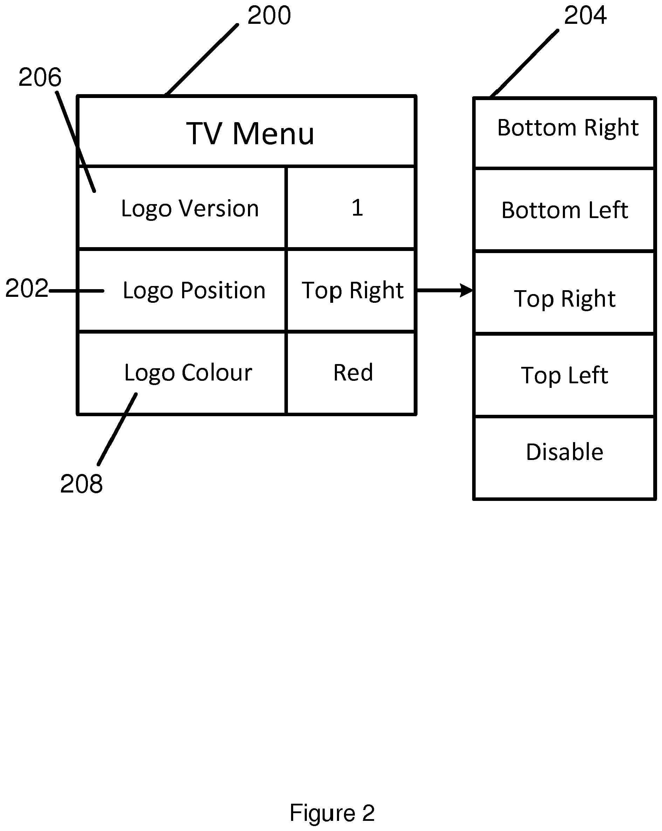

Figure 2 shows schematically an example user interface 200 of the device 100. A user of the device 100 may interact with the user interface 200, for example, via a remote control device. Alternatively or additionally, the user interface may be a touch screen enabling the user of the device 100 to choose an option by interacting directly with a surface of the device 100 or the display screen 102.

As shown in Figure 2, the user may select to change the position of the TV channel logo 104 by selecting the "Logo Position" option 202. Currently, the TV channel logo 104 is indicated as being displayed in the "Top Right" position. This corresponds to the position of the TV channel logo 104 in Figure 1. By selecting the "Logo Position" option 202, the user interface 200 presents a list 204 of options for where the TV channel logo 104 may be repositioned. In examples, the list 104 includes the following five options: "Bottom Right", "Bottom Left", "Top Right", "Top Left" and "Disable". In examples, if the "Disable" option is selected, the device 100 prevents the TV channel logo 104 from being displayed on the display screen 102. In other examples, further options may be presented. In yet further examples, the user interface 200 may provide the user the option to manually position the TV channel logo 104 on the display screen 102. For example, the user may use a remote control with directional buttons to position the TV channel logo 104 on the display screen 102. This may be used to enable the user to freely position the logo anywhere on the display screen 102.

In examples, the device 100 is configured to automatically perform at least one of: (i) changing the position of the TV channel logo 104 on the display screen 102, and (ii) preventing the TV channel logo 104 from being displayed on the display screen 102, after the TV channel logo 104 has been displayed on the display screen 102 for a predetermined time period.

That is, the device 100 may automatically reposition or remove the TV channel logo 104 if the TV channel logo 104 is displayed for a certain amount of time. For example, the TV channel logo 104 may be repositioned in a clockwise manner around the four corners of a display screen 102 every few minutes, such as every ten or every thirty or sixty minutes or so. In examples, the predetermined time period may be set and defined by the user, e.g. via the user interface 200. In examples, the order of the repositioning may be different. For example, the TV channel logo 104 may be repositioned to the opposite corner of the display screen 102 (e.g. top right to top left).

In examples, the device 100 is configured to receive a further file associated with an alternative version of the TV channel logo 104. That is, the broadcaster may transmit one or more versions of the TV channel logo 104 for the same TV channel. The device 100 is configured to store the further file(s). The alternative version of the TV channel logo 104 may be displayed on the display screen 102 instead of the initially displayed TV channel logo 104. For example, the user interface 200 may provide the option to enable a user of the device 100 to select to display the alternative version. For example, Figure 2 shows that the user may select the "Logo Version" option 206 to change the displayed version. Additionally or alternatively, the displayed version may automatically change after a predetermined time period. For example, the alternative version may be displayed instead of the initially displayed version if the initially displayed version is displayed for a period of e.g. thirty minutes or one hour, etc.

In examples, the device 100 is configured to change at least one colour of the television channel logo 104 displayed on the display screen 102. That is, the device 100 may control the display elements to change the colour of the TV channel logo 104, e.g. by mixing different proportions of red, blue and green light. For example, an unaltered TV channel logo 104 may be predominately red in colour. The colour of the TV channel may be changed to be predominately blue in colour, or any other colour. In examples, the colour may be changed manually by a user of the device 100 via the user interface 200 and the user may be provided with an option to freely select the colour that is used. For example, Figure 2 shows that the user may select the "Logo Colour" option 208 to change the displayed colour of the TV channel logo 104. Additionally or alternatively, the displayed colour of the TV channel logo 104 may automatically change after a predetermined time period. For example, the colour of the TV channel logo 104 may be changed every thirty or sixty minutes, etc.

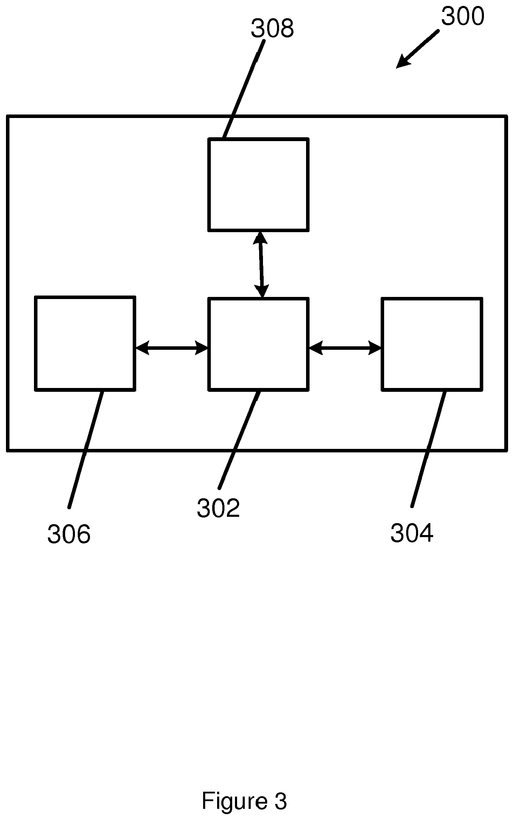

Figure 3 shows schematically an example control system for operating the device 100. The control system 300 and its components as shown in Figure 2 are represented as a schematic block diagram for the purposes of explaining the functionality of the control system only. Hence, it is understood that each component of the control system is a functional block for performing the functionality ascribed to it herein. Each component may be implemented in hardware, software, firmware, or a combination thereof. Additionally, although described as separate components of the control system, some or all of the functionality may be performed by a single piece of hardware, software, or firmware.

The control system 300 has a controller 302, such as a processor, operatively coupled to a user interface 304 and a display screen 306. The user interface 304 for example may be a display in the form of a screen for receiving inputs from the user. For example, the user interface 304 may comprise a touch screen, or a point-and-click user interface 304 comprising a mouse, track pad, or tracker ball or the like. Alternatively or additionally, the user interface 304 may comprise a dedicated actuator or control panel for operating the device 100. For example, the user interface 304 may comprise one or more buttons, sliders, switches and/or dials. The user interface 304 is configured to receive inputs from a user of the device 100. For example, a user may provide an input to remove the TV channel logo 104 from the display screen 306.

The controller 302 may also be operatively coupled to a wireless receiver / transceiver 308 for communicating via any suitable wireless medium, e.g. a radio transceiver for communicating via a radio channel or an infrared receiver for receiving commands via infrared. The wireless transceiver 308 may comprise a Wi-Fi, Bluetooth, etc. interface for enabling the device 100 to communicate wirelessly with other devices, such as a remote control device configured to operate the device 100. Additionally or alternatively, the wireless transceiver 308 may receive commands via a central bridge or a server (not shown), for example, over a local area network such as a WLAN or a wide area network such as the internet.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of operating a device (100) configured to provide an output to a display screen (102), the method comprising:
receiving a file associated with a television channel logo (104);
storing the file in a memory of the device (100); and
performing at least one of: (i) changing the position of the television channel logo (104) on the display screen (102), and (ii) preventing the television channel logo (104) from being displayed on the display screen (102).

2. A method according to claim 1, comprising providing a user of the device (100) with an option to perform at least one of: (i) changing the position of the television channel logo (104) on the display screen (102), and (ii) preventing the television channel logo (104) from being displayed on the display screen (102).

3. A method according to claim 1 or claim 2, comprising automatically performing at least one of: (i) changing the position of the television channel logo (104) on the display screen (102), and (ii) preventing the television channel logo (104) from being displayed on the display screen (102), after the television channel logo (104) has been displayed on the display screen (102) for a predetermined time period.

4. A method according to any of claims 1 to 3, comprising:
receiving a further file associated with an alternative version of the television channel logo;
storing the further file associated with the alternative version of the television channel logo; and
displaying the alternative version of the television channel logo.

5. A method according to any of claims 1 to 4, comprising changing at least one colour of the television channel logo (104) displayed on the display screen (102).

6. A device (100) constructed and arranged to provide an output to a display screen (102), the device (100) being configured to:
receive a file associated with a television channel logo (104);
store the file associated with the television channel logo (104) in a memory of the device (100); and
perform at least one of: (i) changing the position of the television channel logo (104) on the display screen (102), and (ii) preventing the television channel logo (104) from being displayed on the display screen (102).

7. A device (100) according to claim 6, the device (100) being configured to provide a user interface to be displayed on the display screen (102) to present a user of the device (100) with an option to perform at least one of: (i) changing the position of the television channel logo (104) on the display screen (102), and (ii) preventing the television channel logo (104) from being displayed on the display screen (102).

8. A device (100) according to claim 6 or claim 7, the device (100) being configured to automatically perform at least one of: (i) changing the position of the television channel logo (104) on the display screen (102), and (ii) preventing the television channel logo (104) from being displayed on the display screen (102), after the television channel logo (104) has been displayed on the display screen (102) for a predetermined time period.

9. A device (100) according to any of claims 6 to 8, the device (100) being configured to:
receive a further file associated with an alternative version of the television channel logo (104);
store the further file associated with the alternative version of the television channel logo (104); and
display the alternative version of the television channel logo (104).

10. A device (100) according to any of claims 6 to 9, the device (100) being configured to change at least one colour of the television channel logo (104) displayed on the display screen (102).

11. A device (100) according to any of claims 6 to 10, wherein the device (100) is at least one of: (i) a television set and (ii) a set-top box.

12. A computer program comprising instructions such that when the computer program is executed on a computing device, the computing device is arranged to carry out a method according to any of claims 1 to 5.
